# EUROPÄISCHE PATENTSCHRIFT

(11) **EP 3 028 794 B1**
(45) Veröffentlichungstag und Bekanntmachung des Hinweises auf die Patenterteilung: **27.03.2019**
(21) Anmeldenummer: 14196237.3
(22) Anmeldetag: 04.12.2014
(51) Int. Cl.: B23B 31/16, B23B 31/177

(54) **Kraftspannfutter**
Power collet chuck
Mandrin à commande mécanique

(43) Veröffentlichungstag der Anmeldung: 08.06.2016
(73) Patentinhaber: HVM Technology GmbH, 28876 Oyten (DE)
(72) Erfinder: Henke, Volker, 28876 Oyten (DE)
(74) Vertreter: Eisenführ Speiser

(56) Entgegenhaltungen:
- EP-A2- 1 332 818
- WO-A1-2011/137884
- DE-B3-102013 201 231
- US-A- 1 864 423
- US-A1- 2012 319 365

## Beschreibung

Die vorliegende Erfindung betrifft ein Ausgleichsspannfutter für Kraftspannung, mit einem Gehäuse, in dem eine Antriebseinheit mit einer in Richtung einer Spannachse beweglichen Zugführung angeordnet ist, und in dem zwei Paar ineinander diametral gegenüberliegender Grundbacken angeordnet sind, wobei die Grundbacken im Wesentlichen senkrecht zu der Spannachse, vorzugsweise radial beweglich in dem Gehäuse geführt sind, und wobei die Antriebseinheit dazu eingerichtet ist, die Bewegung der Zugführung in die Bewegung der Grundbacken umzusetzen. Das erfindungsgemäße Ausgleichsspannfutter ist insbesondere zum zentrischen Einspannen von Werkstücken eingerichtet. Ein derartiges Ausgleichsspannfutter gemäß dem Oberbegriff des Anspruchs 1 ist aus dem Dokument DE 10 2004 001 839 A1 bekannt.

Spannfutter der eingangs bezeichneten Art werden auch als Vierbackenfutter beziehungsweise Vierbackenspannfutter bezeichnet. Spannfutter zum zentrischen Spannen sind grundsätzlich immer dann erforderlich, wenn Werkstücke in Werkzeugmaschinen zur maschinellen Bearbeitung eingespannt werden müssen, insbesondere wenn jene rotatorisch bearbeitet werden. In modernen Fertigungsumgebungen gibt es zunehmend Bedarf nach Spannvorrichtungen, die sowohl zum Drehen als auch zum Fräsen eingesetzt werden können. Mithin betrifft die Erfindung ein Spannfutter für solche Einsatzzwecke.

Der Grund, überhaupt über den Einsatz von Vierbackenfuttern gegenüber Dreibackenfuttern nachzudenken, liegt darin, dass bei einer höheren Anzahl von Spannbacken, die das Werkstück umgreifen, die Punktlast auf jede einzelne Spannbacke reduziert wird. Infolgedessen werden bei größerer Anzahl von Spannbacken die auf das Werkstück wirkenden und das Werkstück folglich deformierenden Kräfte gleichmäßiger über den Umfang des Werkstücks verteilt. Hierdurch steigt die Maßhaltigkeit des Werkstücks nach Bearbeitung.

Aus dem Stand der Technik sind Vierbackenspannfutter bekannt, die zentrisch spannen. Diese weisen jedoch im Allgemeinen den Nachteil auf, dass sie nur zum Spannen runder Werkstücke geeignet sind bzw. in beiden Spannbackenebenen spiegelsymmetrisch sein müssen, damit alle vier Backen an das Werkstück beim Spannen eingreifen können. Solche starr zentrisch spannenden Spannfutter haben aufgrund eines fehlenden Ausgleichs bezüglich der Werkstückgeometrie nur eingeschränkten Praxisnutzen bei "unrunden" Werkstücken.

Es sind ferner aus dem Stand der Technik auch Vierbacken-Ausgleichsspannfutter bekannt, welche allerdings auch entscheidende Nachteile aufweisen. Bei vielen Vierbackenfuttern mit Ausgleichsfunktion die Wiederholgenauigkeit des zentrischen Spannens eingeschränkt.

Druckschrift WO2011/137884A1 offenbart beispielsweise ein Vierbackenspannfutter mit einer Ausgleichsfunktion dergestalt, dass benachbarte Spannbacken des Spannfutters über eine oder mehrere Pendelstangen miteinander gekoppelt sind. Wird bei einem nicht rotationssymmetrischen Werkstück zunächst ein erstes Paar von Spannbacken mit dem Werkstück in Kontakt gebracht, während das andere Paar von Spannbacken noch nicht in Kontakt steht, werden die entsprechenden Pendelstangen ausgelenkt und sukzessive das zweite Spannbackenpaar an das Werkstück angenähert. Diese kinematische Lösung weist den Nachteil auf, dass aufgrund der zwangsläufig in Kauf zu nehmenden Hebellängen zwischen Antriebskraft und Spannbacke eine gewisse Elastizität im System vorhanden ist und Antriebskraftverluste auftreten. Die hohe Teilekomplexität macht die Systeme ferner potentiell störanfällig.

Ein weiterer Ansatz des Ausgleichs bei Vierbackenspannfuttern findet sich im Bereich der mittel Kraftspannung betätigbaren Spannfutter. DE 10 2004 001 839 A1 offenbart ein Vierbackenspannfutter, bei welchem durch einen Spannzylinder die vier Spannbacken entlang konischer Gleitflächen gezogen werden. Eine hydraulisch oder mechanisch ausgeführte Kraftumlenkung führt zum Verschieben konischer Ausgleichselemente entgegen der Spannrichtung, die ein Annähern von noch nicht in Kontakt befindlichen Spannbacken an das Werkstück ermöglichen sollen. Bei diesem System wird insbesondere als Nachteil angesehen, dass der maxima! mögliche Ausgleichsweg äußert gering ist und die Baugröße der Spannvorrichtung insgesamt für bestimmte Einsatzzwecke unzulässig hoch ist. Zudem ist das System wieder für den Handspannbetrieb geeignet.

Die vorstehend beschriebenen Nachteile werden adressiert in DE 10 2013 201 231 B3. Dort sind Vierbackenspannfutter mit Ausgleichsfunktion beschrieben, die in einigen Ausführungsformen für Handspannbetrieb ausgelegt sind, aber auch für Kraftspannbetätigung. Während die dort vorgestellten Spannfutter sich in der Praxis uneingeschränkt bewähren und eine Ausgleichsfunktion mit großem Ausgleichsbereich bei eingehaltener Zentrizität des Spannvorgangs bieten, besteht doch weiterhin ein Bedarf, die bestehende Technologie weiterzubilden. Insbesondere besteht der Wunsch, ein Spannfutter zu entwickeln, welches in der Herstellung ökonomischer ist und möglichst eine verbesserte Kraftübertragung von der Antriebseinheit auf die Grundbacken aufweist.

Vor diesem Hintergrund lag der Erfindung die Aufgabe zugrunde, ein Spannfutter der eingangs bezeichneten Art dahingehend zu verbessern, dass es ökonomischer herstellbar ist. Insbesondere lag der Erfindung zudem die Aufgabe zugrunde, das Ausgleichsspannfutter dahingehend weiter zu entwickeln, dass eine Kraftübertragung auf die Grundbacken verbessert wird.

Die Erfindung löst die ihr zugrunde liegende Aufgabe bei einem Ausgleichsspannfutter der eingangs bezeichneten Art, indem die Antriebseinheit für jede Grundbacke einen mit der Grundbacke in Eingriff stehenden Mitnehmer aufweist, welcher auf einer Kreisbahn um die Spannachse herum bewegbar ist. Es ist im Rahmen der Erfindung erkannt worden, dass die Anordnung der Antriebsglieder in einem quer zur Spannrichtung bewegten Antriebsschlitten, was eine Ausgleichsbewegung mittels Schwenkhebeln nach sich zog (so in der DE 10 2013 201 231 B3), zwar mit hoher Wiederholgenauigkeit im Betrieb die gewünschten Ergebnisse liefert, aber auch eine hohe Teilezahl und verhältnismäßig hohe Fertigungskomptexität erforderte. Unter "im Wesentlichen senkrecht" werden im Sinne der Erfindung auch noch Abweichungen von ± 5° aus der Senkrechten verstanden.

Hier setzt die Erfindung an. Indem für jede Grundbacke ein Mitnehmer vorgesehen ist, der zusätzlich zu der Bewegung der Grundbacke im Wesentlichen senkrecht zur Spannachse, vorzugsweise radial, noch auf einer Kreisbahn um die Spannachse herum bewegbar ist. Hierdurch können zahlreiche vorteilhafte Effekte erzielt werden, wie sich insbesondere auch aus den nachfolgend geschilderten bevorzugten Ausführungsformen ergibt.

Sofern im Rahmen der Erfindung von einer Kreisbahnbewegung der Schieber gesprochen wird, so ist hierunter eine Bewegung zu verstehen, die eine kreisbahnförmige bzw. tangentiale Bewegungskomponente aufweist, die aber auch weitere Komponenten beispielsweise axial und/oder radial relativ zur Spannachse aufweisen kann.

In einer ersten bevorzugten Weiterbildung der Erfindung weist die Antriebseinheit für jede Grundbacke einen Schieber auf, welcher mit einer Bewegungskomponente auf einer Kreisbahn um die Spannachse herum bewegbar ist. In einer bevorzugten Alternative weist die Antriebseinheit für je ein Grundbackenpaar einen Schieber auf, welcher mit einer Bewegungskomponente auf einer Kreisbahn um die Spannachse herum bewegbar ist.

Die Schieber sind vorzugsweise mit der Zugführung, insbesondere mittels aneinander anliegender Gleitflächen, derart gekoppelt, dass die Spannbewegung der Zugführung eine synchrone Bewegung diametral gegenüberliegender Schieber bewirkt. Diese Bewegung ist beispielsweise eine zu der Spannachse im Wesentlichen senkrechte, vorzugsweise radiale Bewegung der Schieber auf einander zu.

Vorzugsweise weisen die Schieber jeweils eine in einem Winkel zur Spannachse verlaufende Gleitfläche auf, und die Zugführung weist eine korrespondierende, im gleichen Winkel verlaufende Kontaktfläche, oder mindestens einen mit den Gleitflächen der Schieber in Anlage kommenden Vorsprung auf, an dem die Schieber bei einer Bewegung der Zugführung in Richtung der Spannachse abgleiten.

In einer bevorzugten Ausführungsform der Erfindung weisen die Grundbacken jeweils eine Kulissenführung auf, die mit korrespondierenden Mitnehmern der Schieber in Eingriff stehen. Alternativ weisen nicht die Grundbacken, sondern die Schieber jeweils eine Kulissenführung auf, die mit korrespondierenden Mitnehmern der Grundbacken in Eingriff stehen.

In einer weiteren bevorzugten Ausführungsform ist die Kulissenführung derart ausgerichtet, dass eine rotationsfreie Bewegung der Schieber eine synchrone Bewegung diametral gegenüberliegender Grundbacken bewirkt, und eine Bewegung der Schieber auf einer Kreisbahn um die Spannachse eine Relativbewegung des zweiten Grundbackenpaares relativ zu dem ersten Grundbackenpaar bewirkt.

Je nachdem, in welchem Winkel die Kulissenführung relativ zu einer Radialen in Richtung der Spannachse ausgerichtet ist, ist eine höhere oder nicht so hohe Kraft erforderlich, um die Schieber zum Gleiten entlang der Kulissenführung zu bewegen. Vorzugsweise ist der Winkel der Kulissenführung relativ zu der Radialen nur so gewählt, dass ein Gleiten der Schieber entlang der Kulissenführung erst ausgelöst wird, wenn die Grundbacken eines Grundbackenpaares in ihrer Bewegung durch ein Hindernis blockiert werden, insbesondere durch das Erfassen des einzuspannenden Werkzeugs durch die mit den Grundbacken gekoppelten Spannbacken. In einer solchen Ausführungsform blockiert das Werkstück eine Bewegung der Grundbacken des betreffenden Grundbackenpaares, während das andere Grundbackenpaar noch nicht in Eingriff mit dem Werkstück steht. Die Zugführung drängt in einer solchen Situation aber weiter in Richtung der Spannachse. Diejenigen Schieber, deren Grundbacken bereits nicht weiter nach innen ausweichen können, weil sie bereits durch das Werkstück blockiert werden, haben nun, um der Zugführung zu folgen, gar keine andere Wahl mehr, als entlang der Kulissenführung seitlich abzugleiten. Hierbei werden die Schieber mit einer Bewegungskomponente auf einer Kreisbahn ausgelenkt.

Vorzugsweise sind die Schieber bezüglich ihrer Kreisbahnbewegung zwangssynchronisiert, lassen sich also jeweils nur gleichsinnig, insbesondere gleichförmig, auf einer Kreisbahn bewegen.

In einer weiteren bevorzugten Ausführungsform sind die Mitnehmer drehbar an den Schiebern gelagert, vorzugsweise um eine Achsparallele zur Spannachse. Alternativ sind vorzugsweise, falls die Mitnehmer nicht an den Schiebern, sondern an den Grundbacken angeordnet sind, die Mitnehmer drehbar an den Grundbacken gelagert, vorzugsweise um eine Achsparallele zur Spannachse. Durch das drehbare Lagern der Mitnehmer in ihrem jeweiligen zugeordneten Bauteil wird ein Verklemmen der Mitnehmer in den Kulissenführungen bei der Ausgleichsbewegung der Schieber auf den Kreisbahnen vermieden.

In einer weiteren bevorzugten Ausgestaltung der Erfindung ist die Zugführung einteilig ausgebildet, insbesondere als um die Spannachsen drehbarer Ringkörper ausgebildet, mit dem die Schieber gekoppelt sind. Wenn alle Schieber mit demselben drehbaren Ringkörper gekoppelt sind, wird gewährleistet, dass die Schieber sich alle gemeinsam zum Realisieren der Ausgleichsfunktion auf einer Kreisbahn bewegen. Der Radius der Kreisbahn wird je nach Spannzustand größer oder kleiner ausfallen, da die Schieber durch die Zugführung jedenfalls bis zum Erreichen eines ersten Hindernisses in der Spannbewegung auch alle synchron auf die Spannachse zubewegt werden.

In einer alternativen Ausgestaltung weist die Zugführung mehrere, beispielsweise auf einer Kreisbahn um die Spannachse herum bewegliche, Segmente auf, mit denen jeweils ein oder mehrere der Schieber gekoppelt sind.

In einer weiteren bevorzugten Ausführungsform der Erfindung sind die Schieber jeweils in einer korrespondierenden Schieberaufnahme der Zugführung geführt beweglich angeordnet.

Zum Betrieb des erfindungsgemäßen Kraftspannfutters weist die Zugführung vorzugsweise eine Aufnahme für ein Zugrohr auf. Das Zugrohr kann beispielsweise an einem hydraulisch betätigbaren Spanner angeschlossen sein.

Ferner weist vorzugsweise die Zugführung einen Zugring zum Einschließen des Zugrohres in der Aufnahme auf.

Die Erfindung wird im Folgenden anhand bevorzugter Ausführungsbeispiele und unter Bezugnahme auf die beigefügten Figuren näher beschrieben. Hierbei zeigen:
- Figur 1: eine Gesamtansicht eines Ausgleichsspannfutters gemäß einem ersten bevorzugten Ausführungsbeispiel der Erfindung,
- Figur 2a: eine räumliche Ansicht des Spannfutters gemäß Figur 1 in einem teilmontierten Zustand,
- Figur 2b: eine Detailansicht zu Figur 2a,
- Figur 3a: eine Seitenansicht des Spannfutters gemäß Figur 1 mit einem Teilschnitt,
- Figur 3b: eine weitere räumliche Ansicht des Spannfutters gemäß den Figuren 1 und 2,
- Figur 4: eine Draufsicht auf das Spannfutter gemäß Figur 3a, insbesondere senkrecht zu der Darstellung gemäß Figur 3a, mit einem Teilschnitt,
- Figur 5: eine Gesamtansicht eines Ausgleichsspannfutters gemäß einem zweiten bevorzugten Ausführungsbeispiel,
- Figur 6a: eine räumliche Ansicht des Spannfutters gemäß Figur 5 in einem teilmontierten Zustand,
- Figur 6b: eine Detailansicht zu Figur 6a,
- Figur 7: eine weitere räumliche Ansicht des Spannfutters gemäß den Figuren 5 und 6a,b in einem teilmontierten Zustand,
- Figur 8: eine räumliche Ansicht des Spannfutters der Figuren 5 bis 7 von unten,
- Figur 9a: eine Draufsicht auf das Spannfutter gemäß den Figuren 5 bis 8 von oben, und
- Figur 9b: eine Seitenansicht auf die Grundbacken des Spannfutters gemäß den Figuren 5 bis 9a von unten.

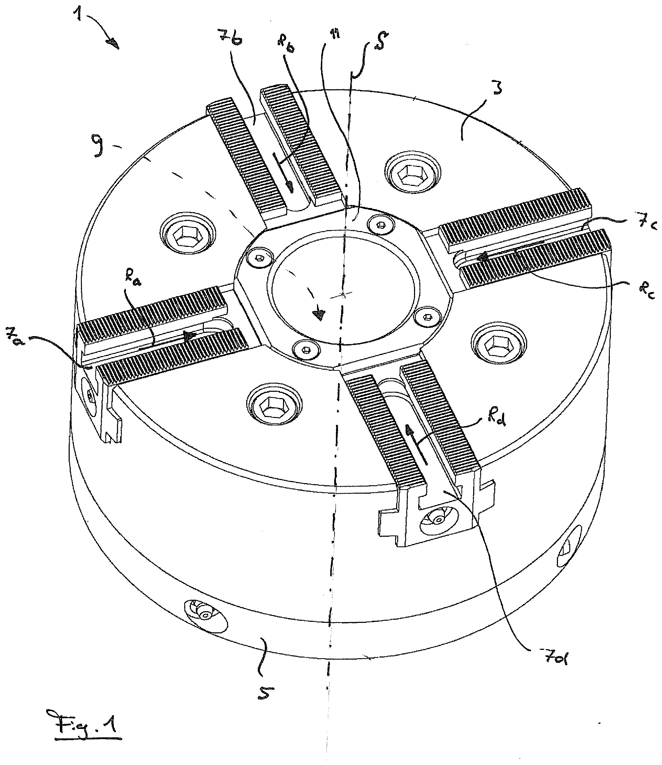

Ein Ausgleichsspannfutter 1 gemäß dem ersten bevorzugten Ausführungsbeispiel der vorliegenden Erfindung ist in Figur 1 abgebildet. Das Spannfutter 1 weist ein Gehäuse 3 auf, welches auf einem Gehäuseunterteil 5 montiert ist. In dem Gehäuse sind jeweils Führungen vorgesehen, in denen insgesamt vier Grundbacken 7a - d beweglich geführt aufgenommen sind. Die Grundbacken 7a und 7c bilden ein erstes Grundbackenpaar. Die Grundbacken 7b, 7d bilden ein zweites Grundbackenpaar. Die Grundbacken der jeweiligen Paare 7a, 7c und 7b, 7d sind jeweils einander diametral gegenüberliegend angeordnet.

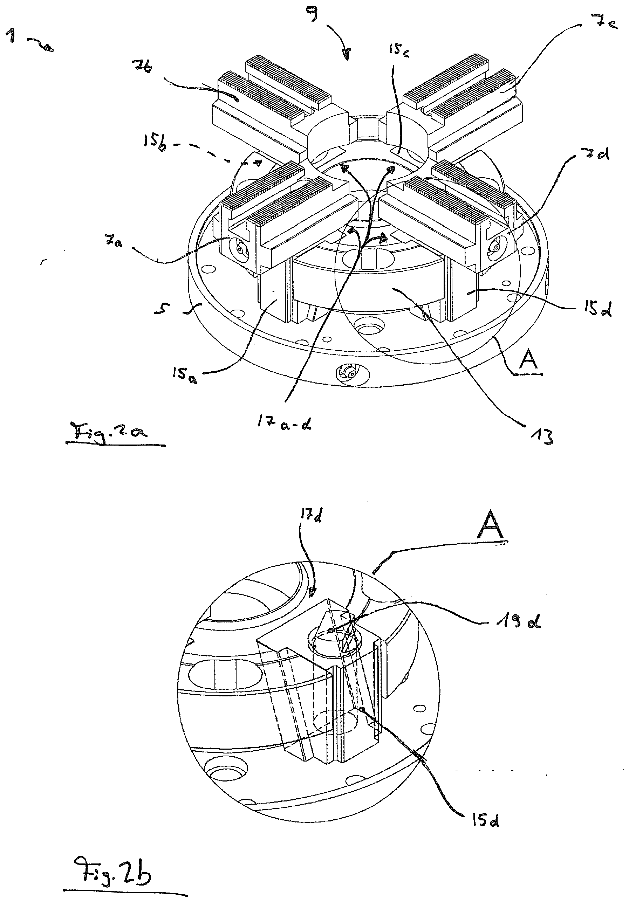

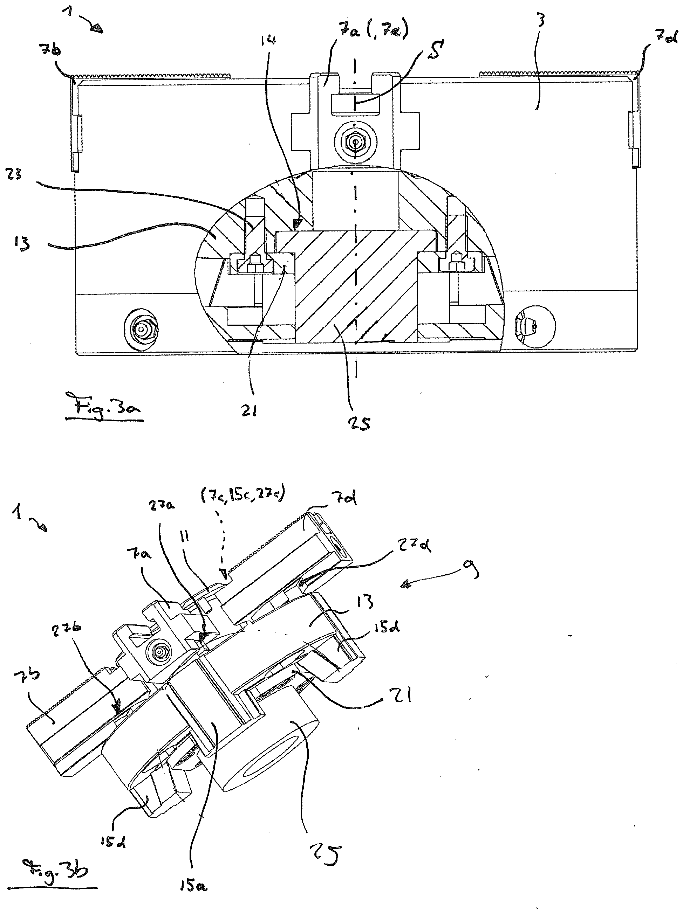

Das Gehäuse 3 ist mit einer als Schmutzrohr ausgebildeten Gehäuseabdeckung abgedeckt, welche die Sicht auf eine Antriebseinheit 9 verdeckt. Mittels der Antriebseinheit 9 wird die Bewegung eines Zugrohres (siehe unten zu Figur 3a, b) in Richtung der Spannachse S umgesetzt in die, durch das Gehäuse vorgegebene, Bewegung der Grundbacken 7a - d in Richtung der Pfeile Ra - Rd. Der innere Aufbau der Antriebseinheit 9 ergibt sich insbesondere anschaulich aus den Figuren 2a und b.

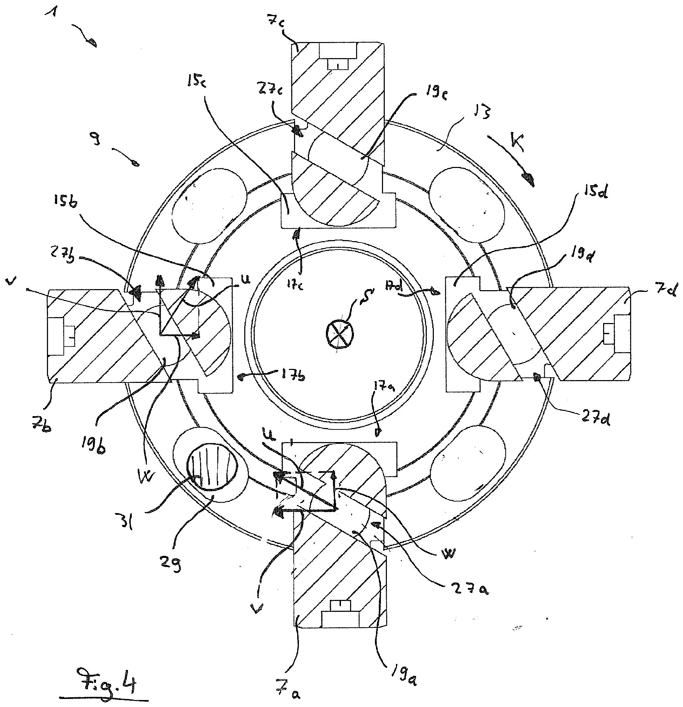

Figur 2a zeigt zunächst eine räumliche Darstellung des Ausgleichsspannfutters 1 ohne das Gehäuse 3. Bezüglich identisch verwendeter Bezugszeichen wird auf Figur 1 verwiesen. Die Antriebseinheit 9 weist eine Zugführung 13 auf. Die Zugführung 13 ist als einteiliger Ringkörper ausgebildet. Mit der Zugführung 13 gekoppelt sind insgesamt vier Schieber 15a, 15b, 15c und 15d. Die Schieber 15a - d sind jeweils in einer Schieberaufnahme 17a - d gleitend aufgenommen, vergleiche auch Figur 2b. Wenn die Zugführung 13 in Richtung der Spannachse S bewegt wird, weichen die Schieber 15a - d in den Aufnahmen 17a - d aufgrund aneinander anliegender Gleitflächen nach innen beziehungsweise außen aus, abhängig von der Bewegungsrichtung der Zugführung 13. Die Schieber 15a - d befinden sich jeweils mittels eines Mitnehmers 19a - d (vergleiche Figur 4) in Eingriff mit den Grundbacken 7a - d. Das genaue Zusammenspiel zwischen Schiebern und Grundbacken wird später anhand Figur 4 noch näher erläutert.

Der Antrieb der Zugführung 13 ist näher in den Figuren 3a, b erläutert. Wie sich zunächst aus Figur 3a ergibt, ist die Zugführung 13 mit einer Aufnahme 14 für ein Zugrohr 25 versehen. Das Zugrohr 25 ist in der Darstellung gemäß Figur 3a in die Aufnahme 14 eingesetzt und mittels eines Zugrings 21 dort fixiert. Der Zugring 21 ist mittels mehrerer Schrauben 23 in der Zugführung 13 befestigt. Vorzugsweise ist das Zugrohr 25 in der Aufnahme 14 mit etwas Spiel in Richtung der Spannachse S aufgenommen, damit eine eventuelle Rotationsbewegung der Zugführung 13 durch das Zugrohr nicht behindert wird. In bevorzugten, hier nicht gezeigten Ausgestaltungen können zur Reibungsminimierung zwischen dem Zugring 21 und dem Zugrohr 25 noch Gleitmittel und/oder Axiallager vorgesehen sein.

Mit Verweis auf Figur 3b ergibt sich der grundsätzliche Betrieb des Ausgleichsspannfutters 1 wie folgt: Wird das Zugrohr 25 in Richtung der Spannachse S (vergleiche Figur 1) bewegt, wird die Zugführung 13 in gleicher Richtung mitbewegt. Hierdurch werden die Schieber 15a - d in ihren Schieberaufnahmen (vergleiche Figuren 2a, b) relativ zu der Zugführung 13 bewegt, und mit ihnen die Mitnehmer 19a - d (vergleiche Figuren 2b und 4). Die Mitnehmer befinden sich im Eingriff mit jeweils einer der Kulissenführungen 27a - d, die in den Grundbacken 7a - d vorgesehen sind. Durch die Eingriffe der Mitnehmer 19a - d in die Kulissenführungen 27a - d wird sowohl die Kraftübertragung auf die Grundbacken 7a - d in Richtung der Pfeile Ra, b, c, d (Figur 1) als auch eine Ausgleichsbewegung der Grundbacken untereinander realisiert. Dies wird näher in Figur 4 erläutert.

Die Querschnittsansicht durch die Grundbacken 7a - d gemäß Figur 4 legt bei dem Ausgleichsspannfutter 1 zugleich den Blick auf den Eingriff der Mitnehmer 19a - d in den Kulissenführungen 27a - d frei.

Die Zugführung 13 ist in Richtung des Pfeils K auf einer Kreisbahn um die Spannachse S herum bewegbar. Da die Schieber 15a - d über ihre Schieberaufnahmen 17a - d ausschließlich relativ zur Zugführung 13 eine zentrische, nämlich radiale, Bewegung (neben dem axialen Abgleiten in Richtung der Gleitflächen) ausüben können, drehen sich die Schieber 15a - d somit zwangsläufig mit einer Bewegungskomponente mit der Zugführung 13 mit. Die Kulissenführungen 27a, c des ersten Grundbackenpaares 7a, c sind in der Anordnung gemäß Figur 4 beispielsweise "linkssteigend" ausgerichtet, während die Kulissenführungen 27b, d des zweiten Grundbackenpaares 7b, d entgegengesetzt, also "rechtssteigend" ausgerichtet sind.

Im Folgenden wird die Ausgleichsfunktion des Spannfutters 1 im Sinne der Erfindung erläutert. Es wird von folgender Situation ausgegangen: Die Grundbacken 7a, b, c, d sind durch eine Bewegung der Zugführung 13 in Richtung der Spannachse S, also in die Bildebene gemäß Figur 4 hinein, zunächst synchron nach innen bewegt worden. Aufgrund der jeweiligen Neigungswinkel der Kulissenführungen 27a - d ist es insbesondere aufgrund von Haftreibung noch nicht zu einem Abgleiten der Grundbacken an den Mitnehmern 19a - d gekommen.

In dem Bild gemäß Figur 4 wird nun angenommen, dass sich das erste Grundbackenpaar 7a, c aufgrund eines Kontakts der mit den Grundbacken 7a, c verbundenen Spannbacken (nicht gezeigt) mit dem Werkstück nicht mehr weiter nach innen bewegen kann (in Richtung der Pfeile Ra, Rc in Figur 1).

Wenn also die beiden Grundbacken 7a, 7c nun feststehen, und die Zugführung 13 weiter in Richtung der Spannachse S drängt, bleibt den Mitnehmern 27a, c nichts anderes übrig, als in der Kulissenführung 27a, c in Richtung des Pfeils u zu gleiten. Durch diese Abgleitbewegung des Mitnehmers 19a, c in Richtung des Pfeils u kann die Bewegung der Zugführung 13 fortgesetzt werden. Gleichzeitig wird die Zugführung 13 in Richtung des Pfeils K mit der Bewegungskomponente v gedreht, wodurch die Schieber eine Art Schraubbewegung vollziehen.

Da alle Mitnehmer 19a, b, c, d mit der Zugführung 13 verbunden sind, werden auch die Mitnehmer 19b, c in Richtung des Pfeils u weiterbewegt. Weil aber die Grundbacken 7b, d des zweiten Grundbackenpaares noch nicht an einer Bewegung gehindert sind (weil die mit den beiden Grundbacken 7b, d gekoppelten Spannbacken noch nicht am Werkstück anliegen), können sie ihre Bewegung auf die Spannachse S zu fortsetzen, so lange, bis auch diese beiden Grundbacken aufgrund des Kontakts der jeweiligen Spannbacken mit dem Werkstück nicht weiter bewegt werden können.

Die Größe des Ausgleichsbereichs lässt sich steuern über die Winkel der Kulissenführungen 27a - d und die maximale Gleitstrecke, die die Mitnehmer 19a - d in den Kulissenführungen 27a - d zurücklegen können.

Das Ausgleichsspannfutter 1 gemäß dem ersten bevorzugten Ausführungsbeispiel basierte auf der Grundidee, dass jeder Grundbacke 7a-d ein separater Schieber 15a-d zugewiesen war, der von einer ringförmigen Zugführung 13 jeweils bewegt wird. Das nachfolgend beschriebene Ausgleichsspannfutter 101 gemäß dem zweiten bevorzugten Ausführungsbeispiel zeigt die prinzipiell gleiche Funktions- bzw. Ausgleichsweise, macht sich aber eine andere Zuordnung zwischen Grundbacken und Schiebern zunutze, wie nachstehend erläutert wird.

Das Ausgleichsspannfutter 101 weist ein Gehäuse 103 auf, welches auf einem Gehäuseunterteil 105 montiert ist. In dem Gehäuse sind jeweils Führungen vorgesehen, in denen insgesamt vier Grundbacken 107a-d beweglich geführt aufgenommen sind. Die Grundbacken 107 a und c bilden ein erstes Grundbackenpaar, während die Grundbacken 107b, 107d ein zweites Grundbackenpaar bilden. Die Grundbacken der jeweiligen Paare 107a,c und 107b,d sind jeweils einander diametral gegenüberliegend angeordnet.

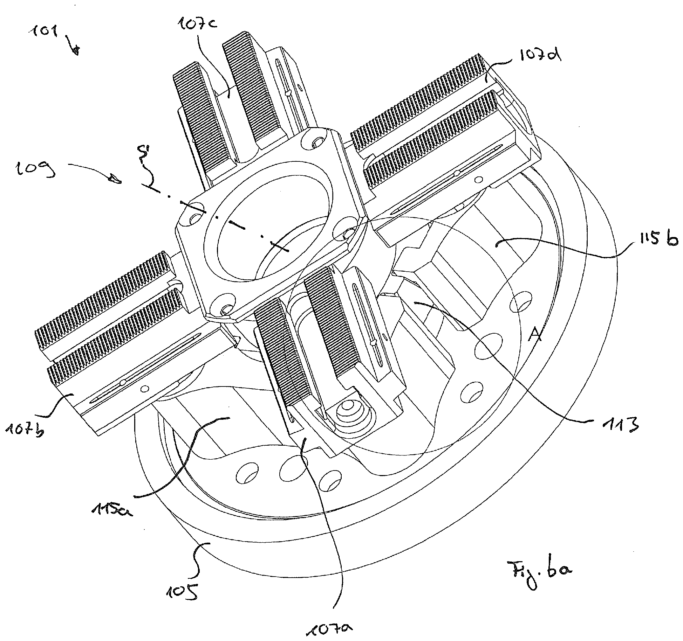

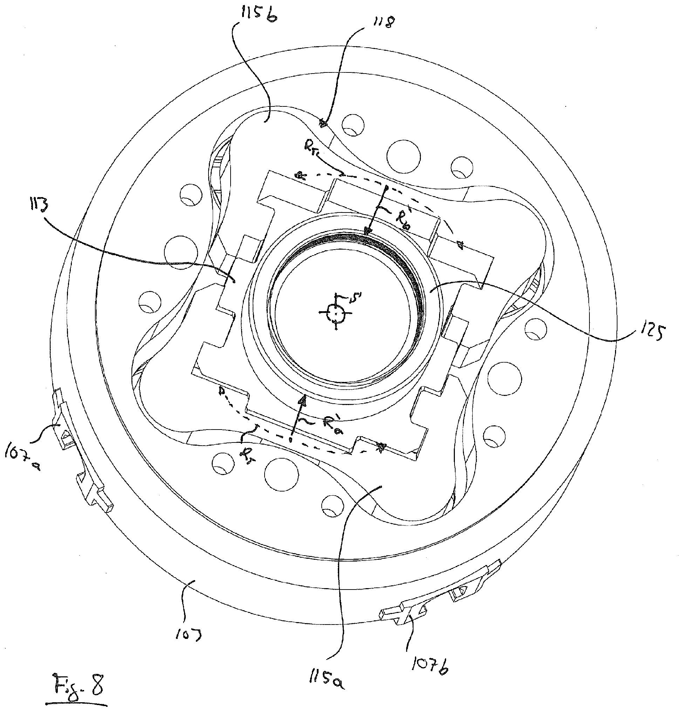

Das Gehäuse 103 ist mit einer als Schmutzrohr ausgebildeten Gehäuseabdeckung 111 abgedeckt, unterhalb welcher eine Antriebseinheit 109 angeordnet ist. Mittels der Antriebseinheit 109 wird die Bewegung eines Zugrohres in Richtung der Spannachse S umgesetzt. In die durch das Gehäuse vorgegebene Bewegung der Grundbacken 107a-d in Richtung der Pfeile Rₐ bis R_{d}. Der innere Aufbau der Antriebseinheit 109 ergibt sich insbesondere anschaulich aus den nachfolgenden Figuren 6a bis 9b.

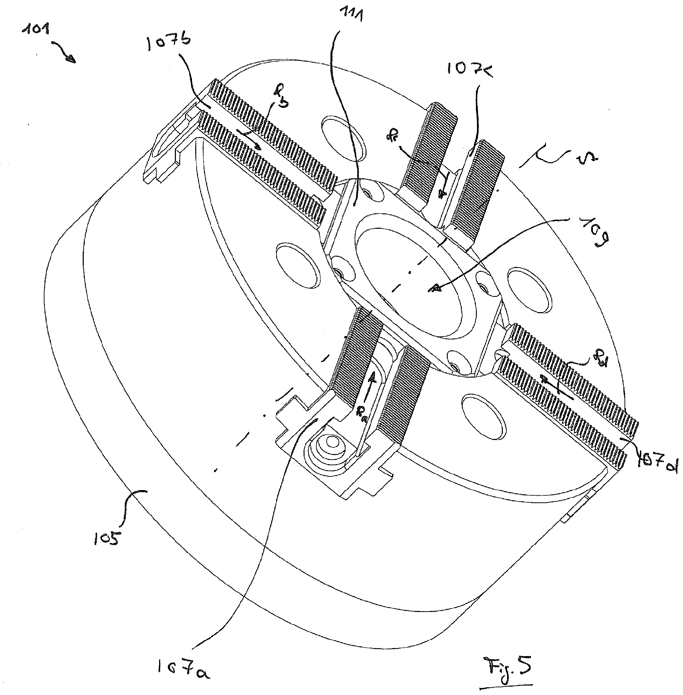

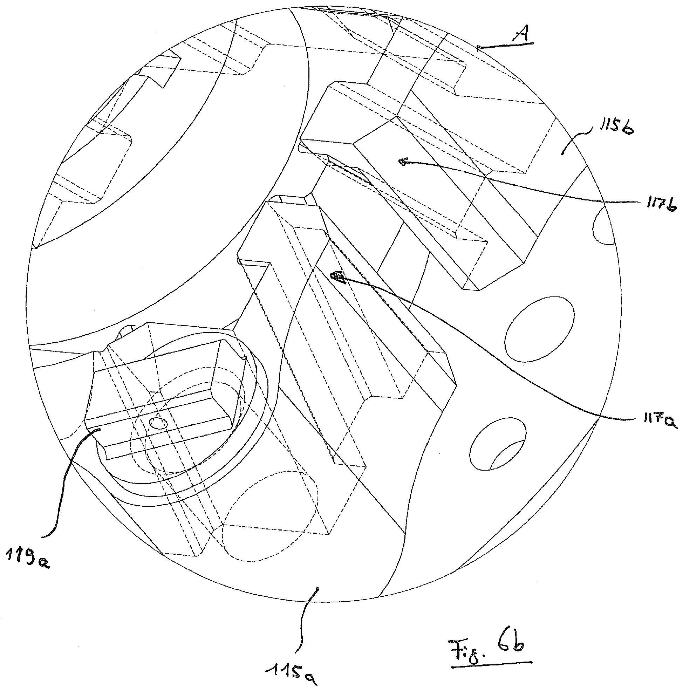

Figur 6a zeigt zunächst eine räumliche Darstellung des Ausgleichsspannfutters 101 ohne das Gehäuse 3. Bezüglich identisch verwendeter Bezugszeichen wird auf Figur 5 verwiesen. Die Antriebseinheit 109 weist eine Zugführung 113 auf. Die Zugführung 113 ist einteilig ausgebildet Es sind insgesamt zwei Schieber 115a, 115b mit der Zugeinheit 113 gekoppelt. Die Schieber 115a,b sind jeweils in einer Schieberaufnahme 117a,b gleitend aufgenommen, siehe insbesondere Figur 6b.

Wenn die Zugführung 113 in Richtung der Spannachse S gezogen wird, weichen die Schieber 115a,b in den Aufnahmen 117a,b aufgrund korrespondierender, aneinander anliegender Gleitflächen aus und bewegen sich aufeinander zu oder voneinander weg, abhängig von der Bewegungsrichtung der Zugführung 113.

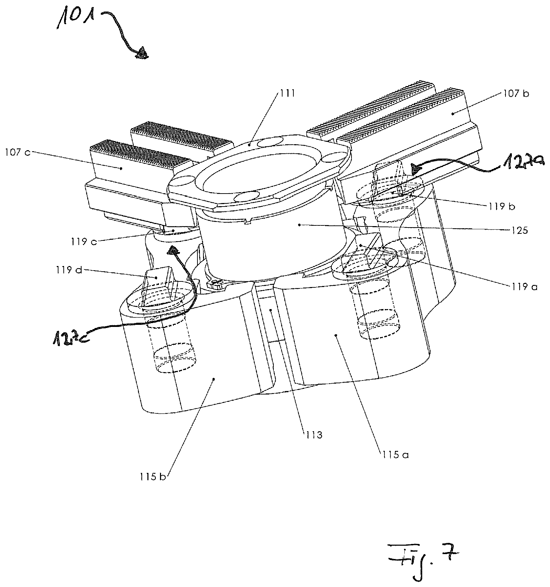

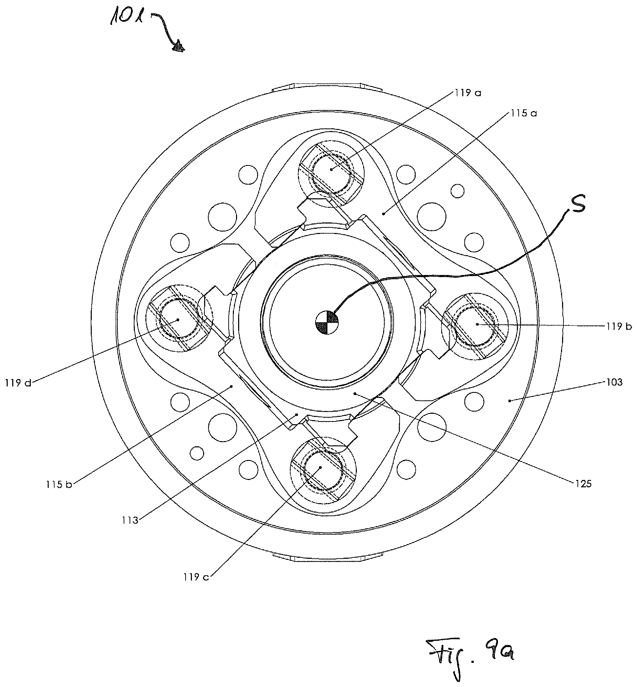

Die Schieber 115a,b weisen jeweils zwei drehbar an ihnen gelagerte Mitnehmer 119a,b und 119c,d auf (vgl. Figuren 7 und 9a). Die Mitnehmer 119a-d sind jeweils in Eingriff mit Kulissenführungen 127a-d der Grundbacken 107a-d.

Wenn im Betrieb des Ausgleichspannfutters 101 an dem Zugrohr 125 in Richtung der Spannachse S gezogen wird, bewegen sich die Schieber 115a, b mit einer Bewegungskomponente in Richtung der Pfeile R'ₐ, R'_{b}. Zusätzlich ist die Zugführung 113 und mit ihr die Schieber 115a, b aber drehbar im Gehäuse 103 gelagert. So ist es möglich, dass, sobald ein erstes Grundbackenpaar 107a, c oder 107b, d beim Spannen auf ein Hindernis, etwa in Form des Werkstücks, trifft, die Zugführung 113 eine zusätzliche Bewegungskomponente in Richtung der angedeuteten Pfeile R_{T} ausführt. In Folge dieser Rotationsbewegung, die durch entsprechende Freilassungen 118 im Gehäuse 103 ermöglicht wird, kommt es zu einer Ungleichbewegung der Grundbacken 107a-d, womit analog zum Ausgleichsspannfutter 1 gemäß dem ersten bevorzugten Ausführungsbeispiel die Ausgleichsfunktion gewährleistet wird. Das Zusammenspiel zwischen Mitnehmern 119a-d und Grundbacken 107a-d ist auch anhand der Figuren 9a-d nochmals dargestellt.

Die drehbar in den Schiebern 115a, b gelagerten Mitnehmer 119a, b und 119b, d gleiten in den Ausnehmungen 127a-d der Grundbacken 107a-d ab, während das Ausgleichsspannfutter gespannt wird.

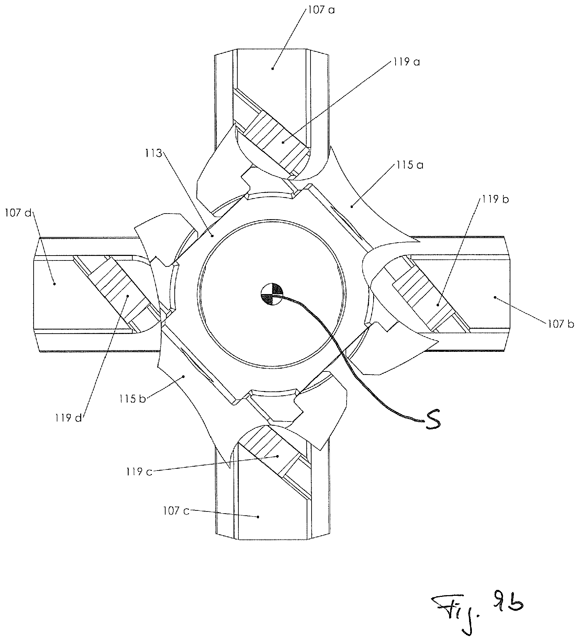

Sobald aufgrund eines ersten Hindernisses die rotationsfreie Bewegung der Zugführung 113 nicht mehr möglich ist, beginnt diese zwangsläufig aufgrund der fortgesetzten Spannbewegung durch das Zugrohr 125, sich zusätzlich mit einer Bewegungskomponente in Richtung des Pfeils K (Figur 9B) zu bewegen. Hierdurch, und die durch die unterschiedlichen Anstellwinkel der Kulissenführungen 127a, b, c, d in den jeweiligen Grundbackenpaaren 107a, c und 107b, d bewegen sich nun nicht mehr alle Grundbacken synchron aufeinander zu. Stattdessen wird ein Grundbackenpaar sich schneller oder langsamer bewegen als das andere Grundbackenpaar, beispielsweise wenn eines der Grundbackenpaare bereits durch Kontakt mit dem Werkstück festgesetzt ist.

In Zusammenschau der vorstehenden Erläuterungen zu den bevorzugten Ausführungsbeispielen wird noch einmal deutlich, dass gegenüber dem Stand der Technik eine zuverlässige zentrische Spann- und Ausgleichsfunktion bei gleichzeitig deutlich verringerter Bautellkomplexität ermöglicht wird. Dies gelingt maßgeblich dadurch, dass die Schieber, insbesondere durch die Kopplung mit der Zugführung 13 bzw 113, zum Ausgleichen auf einer Kreisbahn um die Spannachse S herum bewegbar sind.

Die bevorzugten Ausführungsbeispiele stellen jeweils besonders bevorzugte Merkmalskombinationen der bevorzugten Ausführungsformen der Erfindung dar.

Das Funktionsprinzip lässt sich mit anderen Worten wie folgt zusammenfassen:
Wie vorstehend erörtert wurde, besitzt das Spannfutter im Wesentlichen ein Gehäuse mit vier Grundbacken (Spannstellen) und einen Antrieb, der ein Zugrohr, eine darauf drehbar gelagerte Zugführung und ein Kulissengetriebe mit mindestens zwei sich gegenüberliegenden Schiebern vereinigt. Alle Schieber werden bei dem Spannvorgang auf das Zentrum zu bzw. vom Zentrum weg bewegt. Sie sind so gelagert, dass eine spiegelsymmetrische Bewegung um das Zentrum möglich ist. Mitnehmer, die drehbar in den Schiebern gelagert sind, übertragen die Bewegung über ein Kulissengetriebe auf je eine Grundbacke (Spannstelle). Die Steuernut der Grundbacke (Spannstelle) ist so angeordnet, dass sich bei einer Drehbewegung des Antriebes der Abstand zwischen einem Grundbackenpaar verkleinert und dem anderen Grundbackenpaar vergrößert. Als Grundbackenpaar werden die sich diametral gegenüberliegenden Grundbacken bezeichnet. Trifft während der Bewegung der Grundbacken auf das Zentrum zu oder vom Zentrum weg ein Grundbackenpaar auf einen Widerstand, werden die Mitnehmer des gleichen Grundbackenpaares in dessen Steuernut so geführt, dass sich der Antrieb um das Zentrum dreht, wobei die Mitnehmer in den Steuernuten des anderen Grundbackenpaares für eine Weiterführung der Bewegung auf das Zentrum zu oder vom Zentrum weg sorgen, bis dieses Grundbackenpaar ebenfalls auf einen Widerstand stößt.

## Patentansprüche

1. Ausgleichsspannfutter für Kraftspannung (1, 101), mit
einem Gehäuse (3, 103), in dem
- eine Antriebseinheit (9) mit einer in Richtung einer Spannachse (S) beweglichen Zugführung (13) angeordnet ist, und
- zwei Paar einander diametral gegenüberliegender Grundbacken (7a, c; 7b, d) angeordnet sind, wobei
- die Grundbacken (7a - d) im Wesentlichen senkrecht zu der Spannachse (S), vorzugsweise radial, beweglich in dem Gehäuse geführt sind, und
- die Antriebseinheit (9) dazu eingerichtet ist, die Bewegung der Zugführung (13) in die Bewegung der Grundbacken (7a - d) umzusetzen,
**dadurch gekennzeichnet, dass** die Antriebseinheit (9) für jede Grundbacke (7a - d) einen mit der Grundbacke in Eingriff stehenden Mitnehmer (19a-d) zur Kraftübertragung auf die Grundbacken und zur Realisierung einer Ausgleichsbewegung der Grundbacken untereinander aufweist, welcher mit einer Bewegungskomponente auf einer Kreisbahn (K) um die Spannachse herum bewegbar ist.

2. Ausgleichsspannfutter nach Anspruch 1,
wobei die Antriebseinheit (9) für jede Grundbacke einen Schieber (15a-d) aufweist, welcher mit einer Bewegungskomponente auf einer Kreisbahn (K) um die Spannachse herum bewegbar ist.

3. Ausgleichsspannfutter (101) nach Anspruch 1,
wobei die Antriebseinheit (109) für je ein Grundbackenpaar (107a,b; 107c,d) einen Schieber (115a,b) aufweist, welcher mit einer Bewegungskomponente auf einer Kreisbahn (K) um die Spannachse herum bewegbar ist.

4. Ausgleichsspannfutter nach Anspruch 2,
wobei die Schieber (15a - d) mit der Zugführung (13), vorzugsweise mittels aneinander anliegender Gleitflächen, derart gekoppelt sind, dass die Spannbewegung der Zugführung (13) eine synchrone Bewegung diametral gegenüberliegender Schieber (15a,c; 15b,d) bewirkt,

5. Ausgleichsspannfutter (1, 101) nach Anspruch 4,
wobei die synchrone Bewegung eine zu der Spannachse (S) im Wesentlichen senkrechte vorzugsweise radiale Bewegung der Schieber (15a-d; 115a,b) auf einander zu ist.

6. Ausgleichsspannfutter nach einem der Ansprüche 2 bis 5,
wobei die Grundbacken (7a - d) jeweils eine Kulissenführung (27a - d) aufweisen, die mit korrespondierenden Mitnehmern (19a - d) der Schieber in Eingriff stehen.

7. Ausgleichsspannfutter nach einem der Ansprüche 2 bis 5,
wobei die Schieber jeweils eine Kulissenführung aufweisen, die mit korrespondierenden Mitnehmern der Grundbacken in Eingriff stehen.

8. Ausgleichsspannfutter nach Anspruch 6 oder 7,
wobei die Kulissenführung (29a - d) derart ausgerichtet ist, dass
- eine rotationsfreie Bewegung der Schieber (15a - d) eine synchrone Bewegung diametral gegenüberliegender Grundbacken bewirkt, und
- eine Bewegung der Schieber auf einer Kreisbahn um die Spannachse eine Relativbewegung des zweiten Grundbackenpaares (7b, d) relativ zu dem ersten Grundbackenpaar (7a, c) bewirkt.

9. Ausgleichsspannfutter nach einem der vorstehenden Ansprüche,
wobei die Mitnehmer (19 a, b) drehbar gelagert sind, vorzugsweise an den Schiebern oder an den Grundbacken, besonders bevorzugt um eine Achsparallele zur Spannachse.

10. Ausgleichsspannfutter nach einem der vorstehenden Ansprüche,
wobei die Zugführung (13) einteilig ausgebildet ist, insbesondere als um die Spannachse drehbarer Ringkörper, mit dem die Schieber gekoppelt sind.

11. Ausgleichsspannfutter nach einem der vorstehenden Ansprüche,
wobei die Schieber (15a - d) jeweils in einer korrespondierenden Schieberaufnahme (17a - d) der Zugführung (13) geführt beweglich angeordnet sind.

12. Ausgleichsspannfutter nach einem der vorstehenden Ansprüche,
wobei die Zugführung (13) eine Aufnahme (14) für ein, vorzugsweise hydraulisch betätigtes, Zugrohr (25) aufweist.

13. Ausgleichsspannfutter nach Anspruch 12,
wobei die Zugführung (13) einen Zugring (21) zum Einschließen des Zugrohres (25) in der Aufnahme aufweist.

## Claims

1. A compensating chuck for power clamping (1, 101), having
a housing (3, 103), in which
- a drive unit (9) with a cable guide (13) which is movable in the direction of a clamping axis (S) is arranged, and
- two pairs of mutually diametrically opposite base jaws (7a, c; 7b, d) are arranged, wherein
- the base jaws (7a-d) are guided in a movable manner, preferably radially, in the housing, substantially perpendicularly to the clamping axis (S), and
- the drive unit (9) is set up to convert the movement of the cable guide (13) into the movement of the base jaws (7a-d),
**characterized in that**, for each base jaw (7a-d), the drive unit (9) has a driver (19a-d), which is in engagement with the base jaw, for force transmission to the base jaws and for realizing a compensating movement of the base jaws with respect to one another, which can be moved on a circular path (K) about the clamping axis with a movement component.

2. The compensating chuck according to Claim 1,
wherein the drive unit (9) has a slide (15a-d) for each base jaw, which can be moved on a circular path (K) about the clamping axis with a movement component.

3. The compensating chuck (101) according to Claim 1,
wherein the drive unit (109) has a slide (115a,b) for each base jaw pair (107a,b; 107c,d), which can be moved on a circular path (K) about the clamping axis with a movement component.

4. The compensating chuck according to Claim 2,
wherein the slides (15a-d) with the cable guide (13) are coupled to one another in such a manner, preferably by means of sliding surfaces which bear against one another, that the clamping movement of the cable guide (13) effects a synchronous movement of diametrically opposite slides (15a,c; 15b,d).

5. The compensating chuck (1, 101) according to Claim 4,
wherein the synchronous movement is a preferably radial movement of the slides (15a-d; 115a,b) towards one another substantially perpendicular to the clamping axis (S).

6. The compensating chuck according to one of Claims 2 to 5,
wherein the base jaws (7a-d) have a sliding-block guide (27a-d) in each case, which are in engagement with corresponding drivers (19a-d) of the slides.

7. The compensating chuck according to one of Claims 2 to 5,
wherein the slides have a sliding-block guide in each case, which are in engagement with corresponding drivers of the base jaws.

8. The compensating chuck according to Claim 6 or 7,
wherein the sliding-block guide (29a-d) is aligned in such a manner, that
- a rotation-free movement of the slides (15a-d) effects a synchronous movement of diametrically opposite base jaws, and
- a movement of the slides on a circular path about the clamping axis effects a relative movement of the second base jaw pair (7b, d) relatively to the first base jaw pair (7a, c).

9. The compensating chuck according to one of the preceding claims,
wherein the drivers (19a, b) are mounted in a rotatable manner, preferably on the slides or on the base jaws, particularly preferably about an axis parallel to the clamping axis.

10. The compensating chuck according to one of the preceding claims,
wherein the cable guide (13) is constructed in one piece, particularly as annular bodies, which can be rotated about the clamping axis and to which the slides are coupled.

11. The compensating chuck according to one of the preceding claims,
wherein the slides (15a-d) are arranged in a guided movable manner in a corresponding slide mount (17a-d) of the cable guide (13) in each case.

12. The compensating chuck according to one of the preceding claims,
wherein the cable guide (13) has a mount (14) for a, preferably hydraulically actuated, draw tube (25).

13. The compensating chuck according to Claim 12,
wherein the cable guide (13) has a pull ring (21) for enclosing the draw tube (25) in the mount.

## Revendications

1. Mandrin de serrage de compensation pour le serrage de force (1, 101), avec un boîtier (3, 103), dans lequel
- une unité d'entraînement (9) est agencée avec un guidage de traction (13) mobile en direction d'un axe de serrage (S), et
- deux paires de mâchoires de base (7a, c ; 7b, d) sont agencées de manière diamétralement opposée l'une à l'autre, dans lequel
- les mâchoires de base (7a-d) sont guidées de manière mobile sensiblement perpendiculairement à l'axe de serrage (S) de préférence radialement, dans le boîtier, et
- l'unité d'entraînement (9) est aménagée afin de convertir le mouvement du guidage de traction (13) en le mouvement des mâchoires de base (7a-d),
**caractérisé en ce que** l'unité d'entraînement (9) présente, pour chaque mâchoire de base (7a-d), un entraîneur (19a-d) se trouvant en prise avec la mâchoire de base pour la transmission de force aux mâchoires de base et pour la réalisation d'un mouvement de compensation des mâchoires de base entre elles, lequel est mobile avec une composante de mouvement sur une trajectoire circulaire (K) autour de l'axe de serrage.

2. Mandrin de serrage de compensation selon la revendication 1,
dans lequel l'unité d'entraînement (9) présente, pour chaque mâchoire de base, un coulisseau (15a-d) qui est mobile avec une composante de mouvement sur une trajectoire circulaire (K) autour de l'axe de serrage.

3. Mandrin de serrage de compensation (101) selon la revendication 1,
dans lequel l'unité d'entraînement (109) présente, pour chaque paire de mâchoires de base (107a, b ; 107c, d), un coulisseau (115a, b) qui est mobile avec une composante de mouvement sur une trajectoire circulaire (K) autour de l'axe de serrage.

4. Mandrin de serrage de compensation selon la revendication 2,
dans lequel les coulisseaux (15a-d) sont couplés au guidage de traction (13), de préférence au moyen de surfaces coulissantes reposant les unes contre les autres, de telle manière que le mouvement de serrage du guidage de traction (13) provoque un mouvement synchrone de coulisseaux (15a, c ; 15b, d) diamétralement opposés.

5. Mandrin de serrage de compensation (1, 101) selon la revendication 4,
dans lequel le mouvement synchrone est un mouvement des coulisseaux (15a-d ; 115a, b) les uns vers les autres de préférence radial sensiblement perpendiculaire à l'axe de serrage (S).

6. Mandrin de serrage de compensation selon l'une quelconque des revendications 2 à 5,
dans lequel les mâchoires de base (7a-d) présentent chacune un guidage de coulisse (27a-d) qui se trouve en prise avec des entraîneurs (19a-d) correspondants des coulisseaux.

7. Mandrin de serrage de compensation selon l'une quelconque des revendications 2 à 5,
dans lequel les coulisseaux présentent chacun un guidage de coulisse qui se trouve en prise avec des entraîneurs correspondants des mâchoires de base.

8. Mandrin de serrage de compensation selon la revendication 6 ou 7,
dans lequel le guidage de coulisse (29a-d) est orienté de telle manière que
- un mouvement sans rotation des coulisseaux (15ad) provoque un mouvement synchrone de mâchoires de base diamétralement opposées, et
- un mouvement des coulisseaux sur une trajectoire circulaire autour de l'axe de serrage provoque un mouvement relatif de la seconde paire de mâchoires de base (7b, d) par rapport à la première paire de mâchoires de base (7a, c).

9. Mandrin de serrage de compensation selon l'une quelconque des revendications précédentes,
dans lequel les entraîneurs (19a, b) sont logés de manière rotative, de préférence au niveau des coulisseaux ou au niveau des mâchoires de base, particulièrement de préférence autour d'une parallèle axiale à l'axe de serrage.

10. Mandrin de serrage de compensation selon l'une quelconque des revendications précédentes,
dans lequel le guidage de traction (13) est réalisé d'un seul tenant, en particulier en tant que corps annulaire rotatif autour de l'axe de serrage, auquel les coulisseaux sont couplés.

11. Mandrin de serrage de compensation selon l'une quelconque des revendications précédentes,
dans lequel les coulisseaux (15a-d) sont agencés de manière mobile par guidage respectivement dans un logement de coulisseau (17a-d) correspondant du guidage de traction (13).

12. Mandrin de serrage de compensation selon l'une quelconque des revendications précédentes,
dans lequel le guidage de traction (13) présente un logement (14) pour un tube de traction (25) actionné de préférence de manière hydraulique.

13. Mandrin de serrage de compensation selon la revendication 12,
dans lequel le guidage de traction (13) présente un anneau de traction (21) pour l'inclusion du tube de traction (25) dans le logement.
